# EUROPÄISCHE PATENTSCHRIFT

(11) **EP 1 984 206 B1**
(45) Veröffentlichungstag und Bekanntmachung des Hinweises auf die Patenterteilung: **09.12.2009**
(21) Anmeldenummer: 07703349.6
(22) Anmeldetag: 08.02.2007
(51) Int. Cl.: B60N 2/02

(54) **VORRICHTUNG ZUR SITZTIEFENVERSTELLUNG EINES KRAFTFAHRZEUGSITZES**
DEVICE FOR ADJUSTING THE SEAT DEPTH OF A MOTOR VEHICLE SEAT
DISPOSITIF DE REGLAGE EN PROFONDEUR D'UN SIEGE DE VEHICULE AUTOMOBILE

(30) Priorität: 08.02.2006 DE 202006001969 U
(43) Veröffentlichungstag der Anmeldung: 29.10.2008
(73) Patentinhaber: Brose Fahrzeugteile GmbH & Co. KG, Coburg, 96450 Coburg (DE)
(72) Erfinder: HOFMANN, Jochen, 96257 Marktgraitz (DE); KRÖNER, Gregor, 96120 Bischberg (DE)
(74) Vertreter: Ninnemann, Detlef
(86) Internationale Anmeldenummer: PCT/EP2007/001072
(87) Internationale Veröffentlichungsnummer: WO 2007/090642

(56) Entgegenhaltungen:
- DE-A1- 4 339 114
- DE-A1- 10 112 918
- GB-A- 2 252 723

## Beschreibung

Die Erfindung betrifft eine Vorrichtung zur Sitztiefenverstellung eines Kraftfahrzeugsitzes gemäß dem Oberbegriff des Anspruchs 1.

Aus der DE 102 22 995. C1 ist ein Verstellantrieb für einen gegenüber einem sitzfesten Bereich eines Kraftfahrzeugsitzes über Führungsstangen verschiebbaren, den Oberschenkelbereich eines Fahrzeuginsassen tragenden Sitztiefenverstellbereich bekannt, der eine Gewindehülse mit einem Innengewinde und einem Außengewinde aufweist, das mit einer Spindelmutter in Eingriff steht, während das Innengewinde mit einer Gewindespindel verbunden ist.

Aus der DE 101 12 918 A1 ist ein Fahrzeugsitz mit einer Sitzlehne und einem Sitzteil bekannt, das ein Sitzuntergestell, eine mit dem Sitzuntergestell verbundene und ein Sitzkissen tragende Sitzwanne und ein an der Sitzwanne geführtes und gegenüber der Sitzwanne mittels einer Sitztiefenverstelleinrichtung verstellbares Sitztiefenverstellteil aufweist, das mit einem Polsterstoff umspannt ist, der in Verstellrichtung mittels einer Nachführeinrichtung mit gegenüber dem Verstellweg des Sitztiefenverstellteils doppeltem Verstellweg nachgeführt wird.

Weitere Vorrichtungen zur Sitztiefenverstellung sind aus der DE 43 39 114 A1 und der GB 2 252 723 A bekannt.

Aufgabe der vorliegenden Erfindung ist es, eine Vorrichtung gemäß dem Oberbegriff des Anspruchs 1 anzugeben, die einfach montierbar und insbesondere vormontierbar, kompakt aufgebaut und in einfacher Weise den jeweiligen Gegebenheiten eines Kraftfahrzeugsitzes anpassbar ist.

Diese Aufgabe wird erfindungsgemäß durch eine Vorrichtung zur Sitztiefenverstellung eines Kraftfahrzeugsitzes mit den Merkmalen des Anspruchs 1 gelöst.

Nach der Erfindung ist vorgesehen, dass die das Sitztiefenverstellteil antreibende Verstelleinheit sowie die Nachführvorrichtung für den Polsterstoff eine Einheit bilden. Durch die bauliche und funktionelle Einheit der Verstelleinheit für das Sitztiefenverstellteil und der Nachführvorrichtung für den Polsterstoff ist die Sitztiefenverstellung des Kraftfahrzeugsitzes in einfacher Weise vormontierbar, sehr kompakt aufgebaut und leicht an die Gegebenheiten eines Kraftfahrzeugsitzes anpassbar. Dabei weist die Verstelleinheit für das Sitztiefenverstellteil ein Gehäuse auf, das linear beweglich unterhalb des als Sitzwanne ausgebildeten Sitzunterteils angebracht und mit dem Sitztiefenverstellteil verbunden ist.

Durch diese Ausgestaltung der Verstelleinheit für das Sitztiefenverstellteil ist eine geschützte Anordnung der Verstellelemente der Verstelleinheit gewährleistet und gleichzeitig die Voraussetzung dafür gegeben, Teile des Gehäuses in den Verstellmechanismus zu integrieren.

Das Sitztiefenverstellteil weist eine sich in der Ebene der Fahrzeuglängsachse oder X-Achse und der Fahrzeugquerachse oder Y-Achse erstreckende erste Verstellteilfläche und eine von der ersten Verstellteilfläche im Wesentlichen rechtwinklig abgewinkelte zweite Verstellteilfläche auf, die sich in der Ebene der Fahrzeugquerachse oder Y-Achse und Fahrzeughochachse oder Z-Achse erstreckt und über Verbindungselemente mit dem Gehäuse verbunden ist.

Diese Ausgestaltung des Sitztiefenverstellteils und dessen Verbindung mit dem Gehäuse der Verstelleinheit für das Sitztiefenverstellteil ermöglicht eine Platz sparende Anordnung der Verstelleinheit und dessen Verbindung mit dem Sitztiefenverstellteil unter gleichzeitiger Ausnutzung der beiden das Sitztiefenverstellteil bildenden Verstellteilflächen als Gehäusewand der Verstelleinheit.

Durch die Ausbildung der Nachführvorrichtung für den Polsterstoff als eine an der Unterseite des Gehäuses der Verstelleinheit linear beweglich angebrachte Platte ist eine enge Zuordnung der Verstelleinheit und der Nachführvorrichtung für den Polsterstoff für die kompakte Ausbildung der Sitztiefenverstellvorrichtung gewährleistet.

Um bei einer Sitztiefenverstellung den Polsterstoff spannungsfrei nachzuführen, weist die als Platte ausgebildete Nachführvorrichtung für den Polsterstoff eine Lochverzahnung auf, die mit einem im Gehäuse drehbar gelagerten Ritzel kämmt, das gleichzeitig in eine gegenüber der Sitzwanne feststehende Verzahnung eingreift, so dass bei einer Bewegung des Gehäuses das Ritzel gedreht wird und durch seinen Eingriff in die Lochverzahnung die die Lochverzahnung enthaltende Platte der Nachführvorrichtung für den Polsterstoff eine gegenüber dem Verstellweg der Verstelleinheit doppelten Weg zurücklegt.

Zum Verstellen des Sitztiefenverstellteils ist das Gehäuse der Verstelleinheit mit einem Motor verbunden, der eine das Gehäuse verstellende Spindel antreibt, die mit einer Spindelmutter zusammenwirkt, die mit einer am Sitzunterteil bzw. an der Sitzwanne angebrachten Spindelmutteraufnahme angeordnet ist, an deren Unterseite die mit dem Ritzel zusammenwirkende feststehende Verzahnung angeordnet ist.

Durch diese Integration der Antriebseinrichtung der Verstelleinheit in das Gehäuse und dessen Wirkverbindung sowohl mit der linear beweglich an der Unterseite des Gehäuses angeordneten Platte der Nachführvorrichtung für den Polsterstoff als auch mit der feststehenden Verzahnung wird die kompakte Ausbildung der Sitztiefenverstellung bei gleichzeitig einfacher Montage unterstützt.

Vorzugsweise ist das Gehäuse der Verstelleinheit in eine unterhalb des Sitzunterteils bzw. der Sitzwanne angebrachte, das Gehäuse in Fahrzeuglängsrichtung (X-Achse) führende Führungsplatte eingehängt ist.

Die mit dem Sitzunterteil bzw. der Sitzwanne verbundene Führungsplatte dient somit sowohl zur Führung des Gehäuses und damit des Sitztiefenverstellteils in Fahrzeuglängsrichtung als auch der Aufnahme des Gehäuses und damit der Verbindung zwischen dem Sitztiefenverstellteil und der Verstelleinheit.

Vorzugsweise weist das Gehäuse an den oberen Enden seiner Seitenwände abgewinkelte Stege auf, die von in Fahrzeuglängsrichtung verlaufenden Seitenführungen der Führungsplatte umgriffen sind.

Anhand eines in den Figuren der Zeichnung dargestellten Ausführungsbeispieles sollen die Erfindung und der der Erfindung zugrunde liegende Gedanke näher erläutert werden. Es zeigen:
- Fig. 1 und 2: isometrische Ansichten von der Ober- und Unterseite eines als Sitzwan- ne ausgebildeten Sitzunterteils mit einer Sitztiefenverstellung;
- Fig. 3: eine isometrische Ansicht des Sitztiefenverstellteils, der Verstelleinheit und der Nachführvorrichtung für den Polsterstoff von der Unterseite ei- nes Kraftfahrzeugsitzes;
- Fig. 4 und 5: verschiedene isometrische Ansichten des Sitztiefenverstellteils und der Verstelleinheit der Sitztiefenverstellung;
- Fig. 6: eine isometrische Ansicht des in eine Führungsplatte eingehängten Ge- häuses der Verstelleinheit mit einem Teil des Verstellmechanismus;
- Fig. 7 und 8: verschiedene isometrische Ansichten des Sitztiefenverstellteils, der Füh- rungsplatte und der Verstelleinheit von der Unterseite bei eingezogenem Sitztiefenverstellteil;
- Fig. 9 und 10: verschiedene isometrische Ansichten des Sitztiefenverstellteils, der Füh- rungsplatte und der Verstelleinheit von der Unterseite bei ausgefahre- nem Sitztiefenverstellteil;
- Fig. 11 und 12: isometrische Ansichten von der Führungsplatte, der Verstelleinheit und Teilen des Verstellmechanismus der Sitztiefenverstellung;
- Fig. 13: eine Frontansicht der Sitztiefenverstellung mit der Antriebseinrichtung der Verstelleinheit;
- Fig. 14 und 15: verschiedene isometrische Ansichten des Gehäuses der Verstelleinheit mit der darin angeordneten Antriebseinrichtung der Verstelleinheit;
- Fig. 16 und 17: einen Längsschnitt durch die Sitzverstellung mit der Sitzwanne, dem Sitztiefenverstellteil, der Antriebseinrichtung der Verstelleinheit und der Nachfüllvorrichtung für den Polsterstoff bei gegenüber der Sitzwanne eingefahrenem und ausgefahrenem Sitztiefenverstellteil.

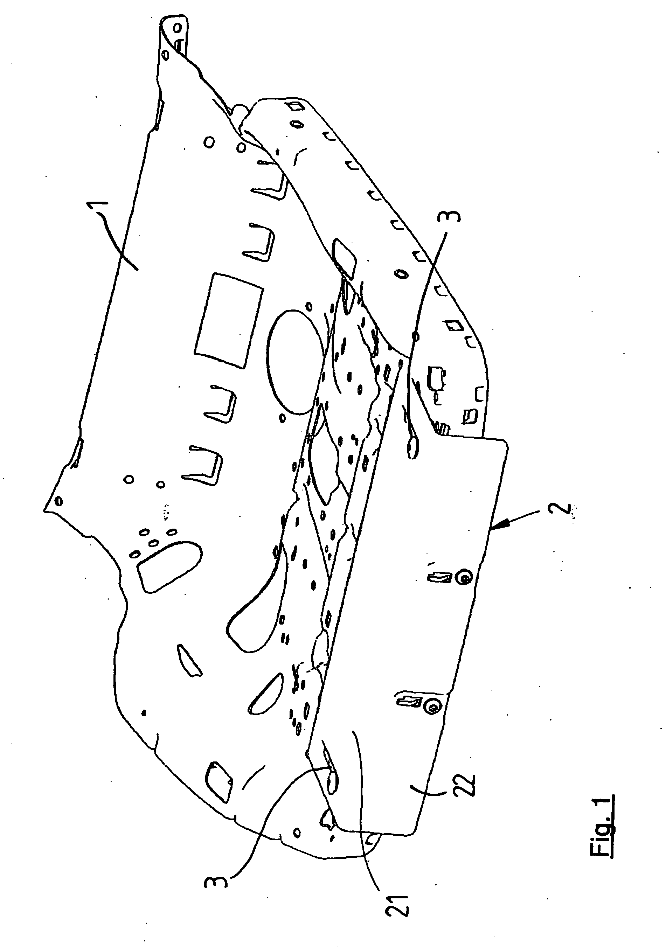

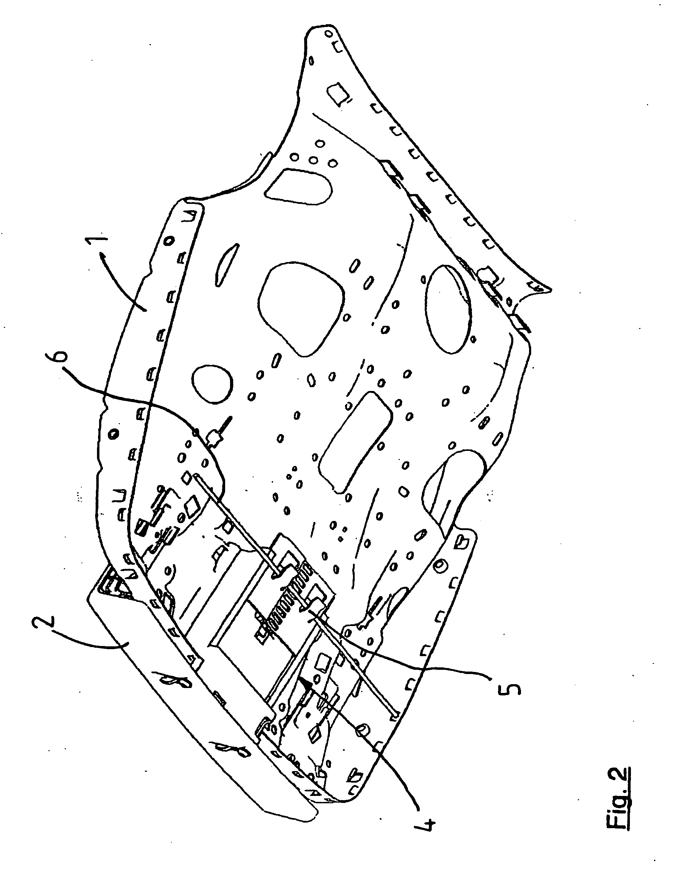

In den Fig. 1 und 2 ist in isometrischer Ansicht von der Ober- und Unterseite eines Kraftfahrzeugsitzes ein als Sitzwanne 1 ausgebildetes Sitzunterteil mit einem an der Vorderkante angelenkten Sitztiefenverstellteil 2 einer Sitztiefenverstellung dargestellt. Das Sitztiefenverstellteil 2 weist eine sich im Wesentlichen in der Ebene der Fahrzeuglängsachse oder X-Achse und der Fahrzeugquerachse oder Y-Achse erstreckende horizontale Verstellteilfläche 21 auf, von der im Wesentlichen rechtwinklig eine vertikale Verstellteilfläche 22 abgewinkelt ist, die sich in der Ebene der Fahrzeugquerachse oder Y-Achse und Fahrzeughochachse oder Z-Achse erstreckt und die Vorderkante des Sitztiefenverstellteils 2 der Sitztiefenverstellung bildet, während die horizontale Verstellteilfläche 21 eine Sitzflächenverlängerung der Sitzwanne 1 ausbildet.

Die horizontale Verstellteilfläche 21 des Sitztiefenverstellteils 2 weist in Richtung der Fahrzeuglängsachse oder X-Achse verlaufende Führungsaufnahmen einer Geradführung 3 auf, die benachbart zu den Seitenwänden der Sitzwanne 1 angeordnet sind, so dass das Sitztiefenverstellteil 2 beidseitig gegenüber der Sitzwanne 1 im Wesentlichen horizontal verstellbar ist.

Die horizontale Verstellung des Sitztiefenverstellteils 2 gegenüber der Sitzwanne 1 erfolgt über eine an der Unterseite der Sitzwanne 1 angeordnete Verstelleinheit 4, an deren Unterseite eine Nachführvorrichtung 5 für einen Polsterstoff zur Polsterung des Kraftfahrzeugsitzes angeordnet ist. Ein Ende des das Sitztiefenversteil 2 umspannenden, nicht näher dargestellten Polsterstoffes ist mit einer Stange 6 der Nachführvorrichtung 5 für den Polsterstoff verbunden und über die vertikale Verstellteilfläche 22 und horizontale Verstellteilfläche 21 des Sitztiefenverstellteils 2 geführt.

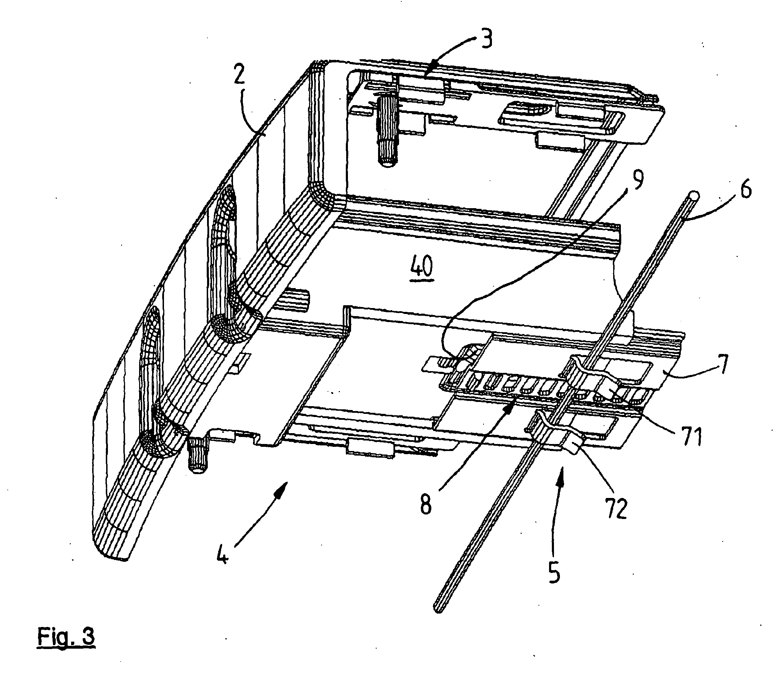

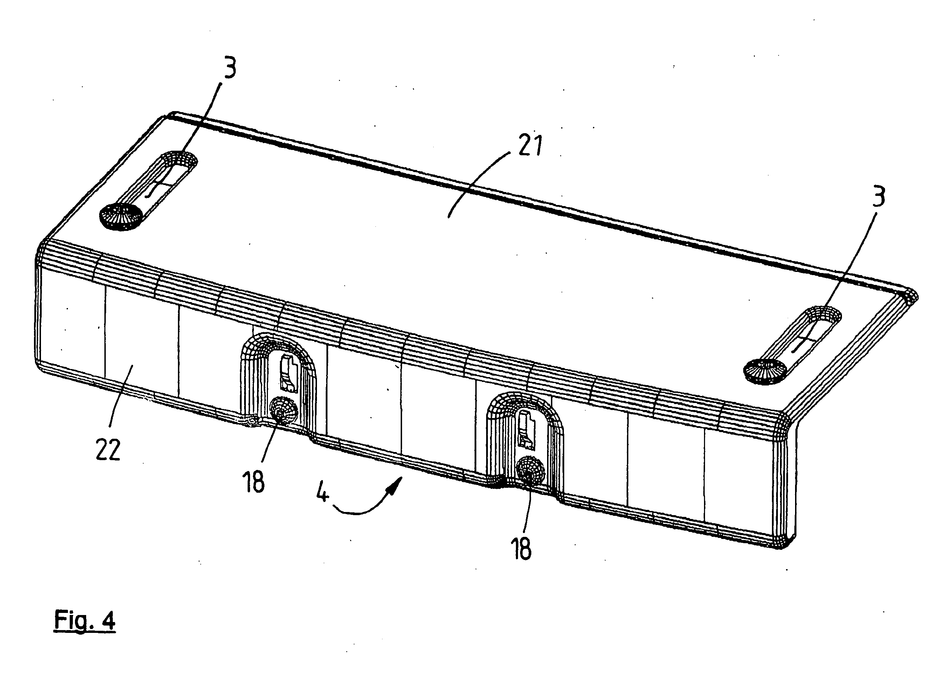

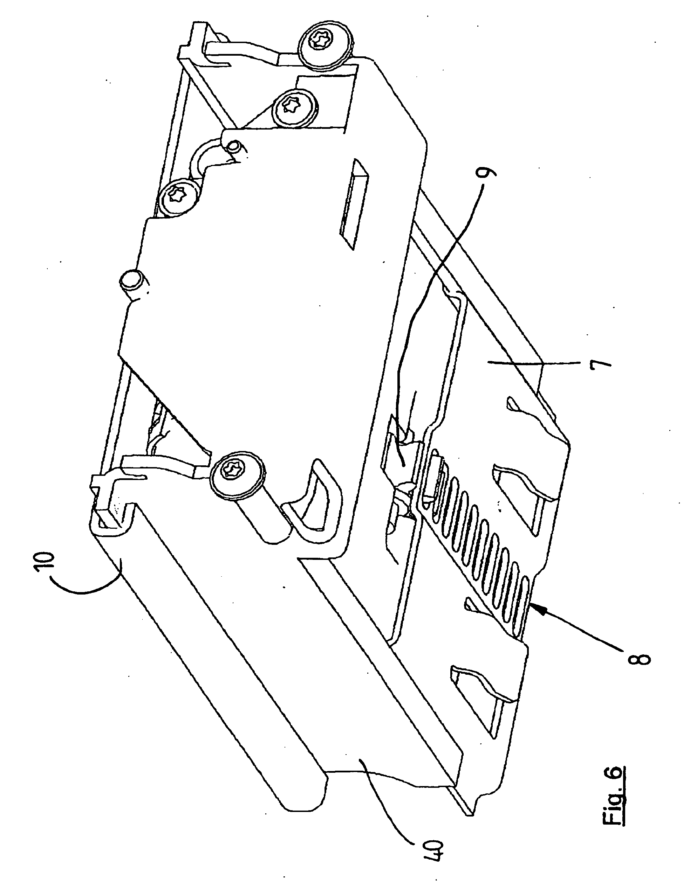

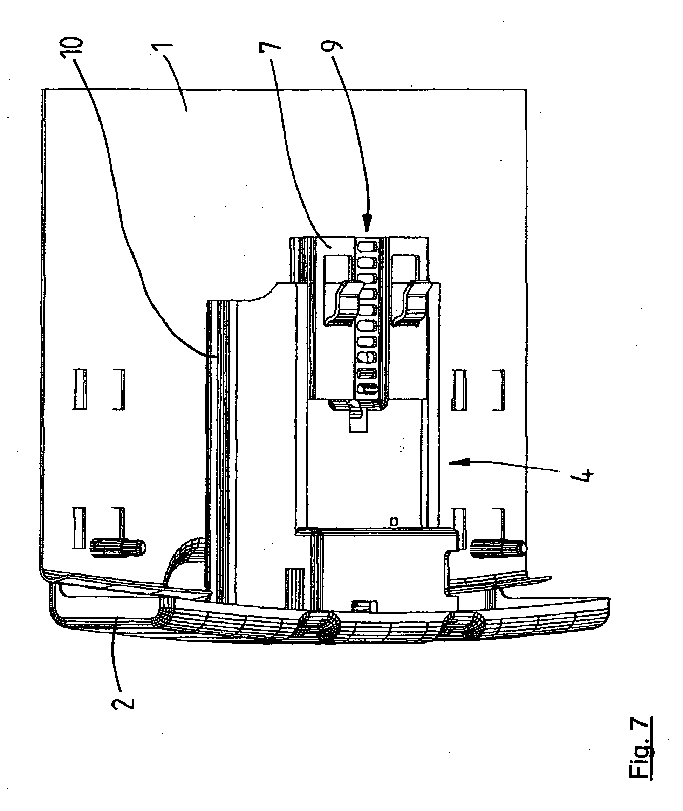

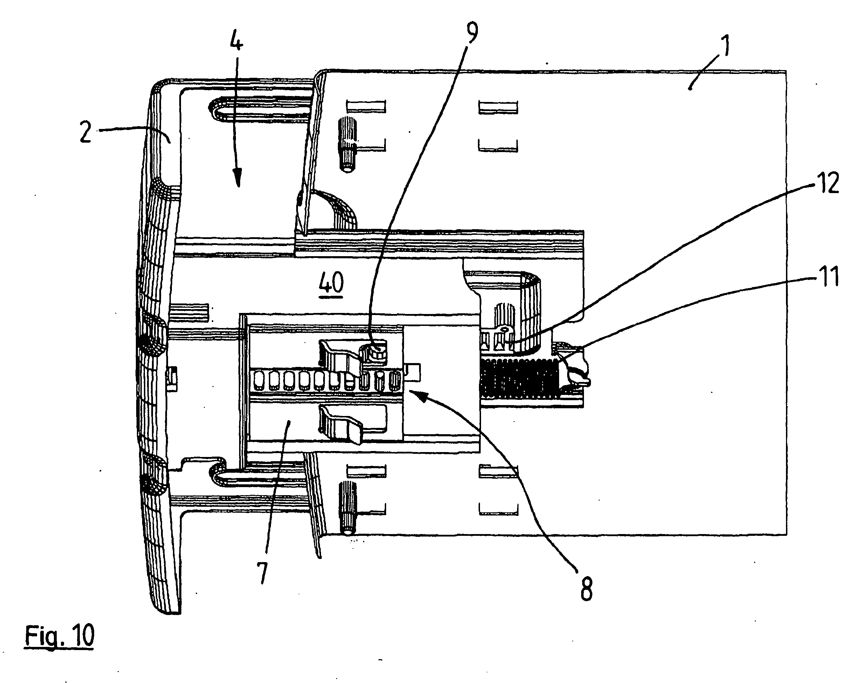

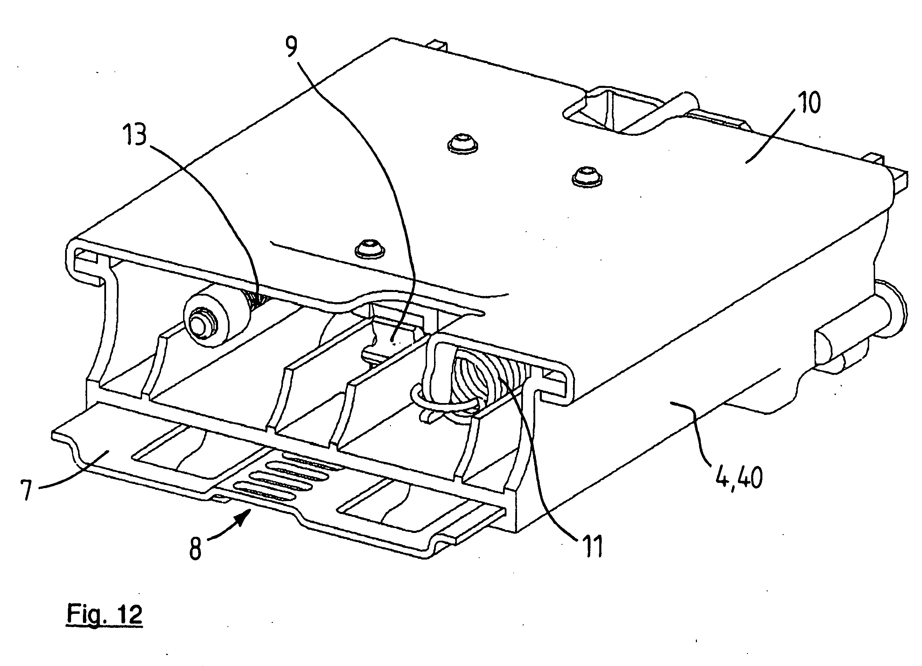

Die das Sitztiefenverstellteil 2 in Richtung der Fahrzeuglängsachse gegenüber der Sitzwanne 1 verstellende Verstelleinheit 4 weist gemäß Fig. 3 ein Gehäuse 40 auf, dessen Stirnseite gemäß den Fig. 3 und 4 über Verbindungselemente 18 mit der vertikalen Verstellteilfläche 22 des Sitztiefenverstellteils 2 verbunden ist. Eine an der Unterseite des Gehäuses 40 linear geführte Platte 7 der Nachführvorrichtung 5 für den Polsterstoff weist eine Lochverzahnung 8 auf, die mit einem Ritzel 9 (Figuren 3, 6, 7, 10, 12, 14, 16, 17) kämmt und aus der zwei Laschen 71, 72 herausgeformt sind, in die die den Polsterstoff aufnehmende Stange 6 eingehängt ist.

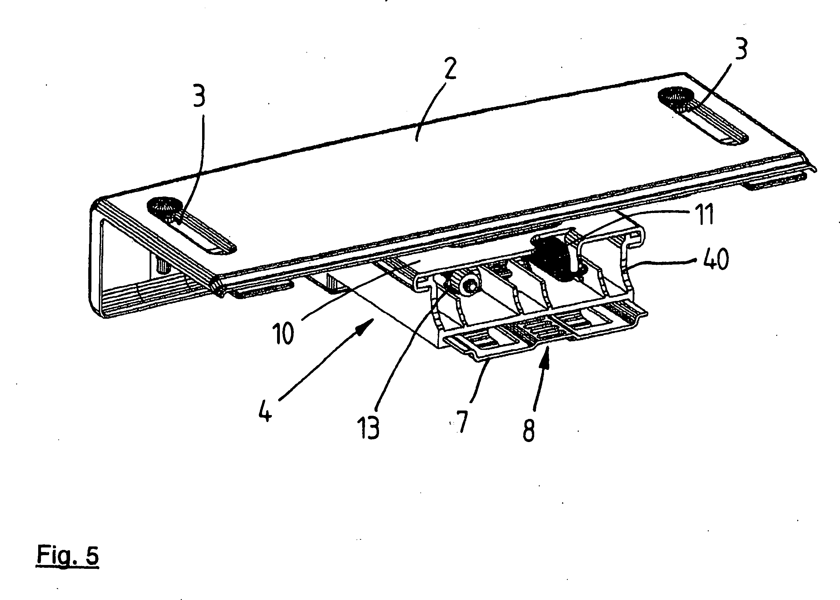

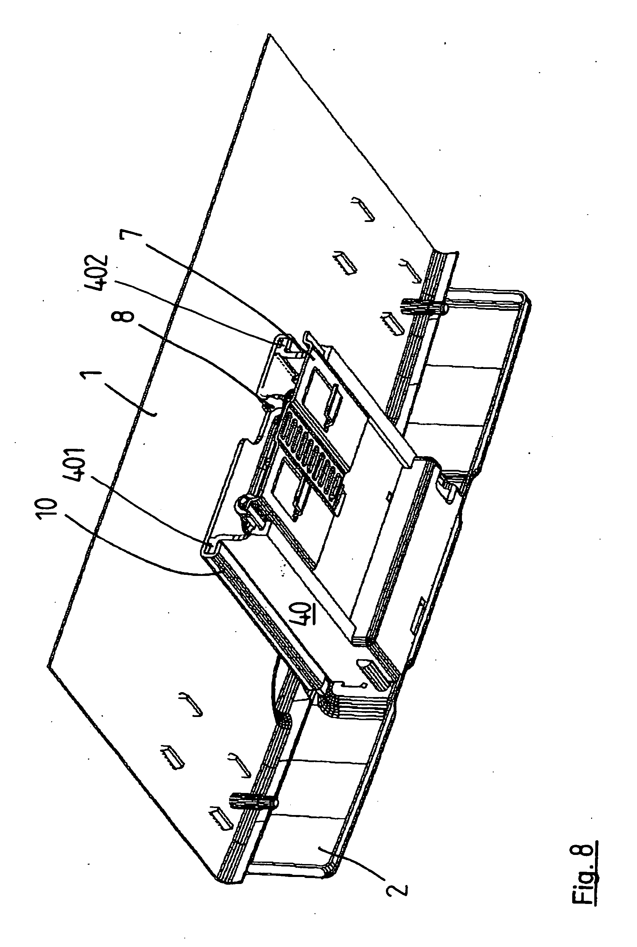

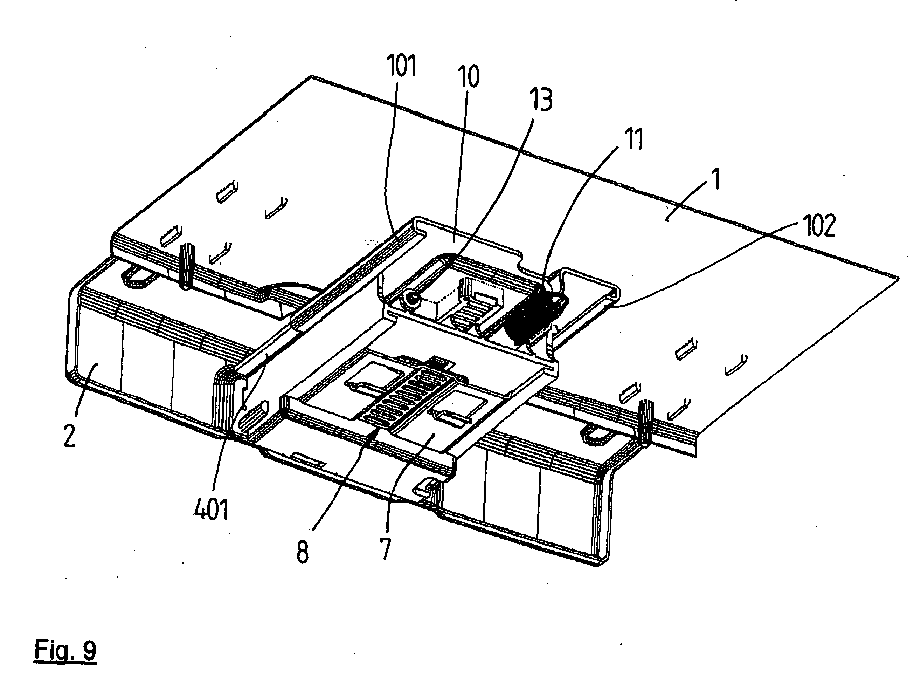

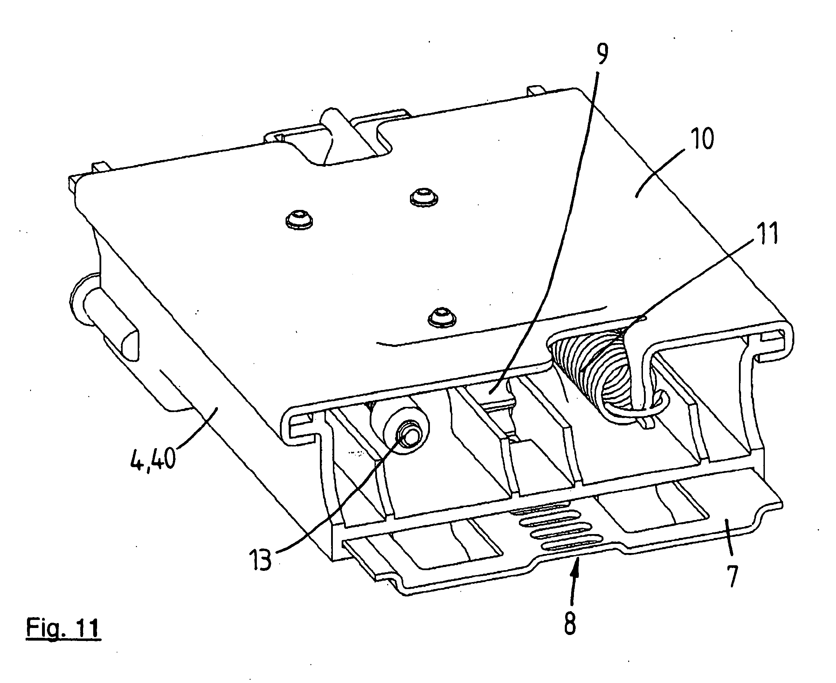

Wie den Fig. 3 und 5 bis 13 zu entnehmen ist, ist das Gehäuse 40 der Verstelleinheit 4 linear verschiebbar an einer an der Unterseite der Sitzwanne 1 angebrachten Führungsplatte 10 eingehängt. Zu diesem Zweck weist das Gehäuse 40 an den oberen Enden seiner Seitenwände abgewinkelte Stege 401, 402 (Fig. 9) auf, die von in Richtung der Fahrzeuglängsachse oder X-Achse ausgerichteten Seitenführungen 101, 102 der Führungsplatte 10 umgriffen sind, so dass das Gehäuse 40 und damit das mit dem Gehäuse 40 verbundene Sitztiefenverstellteil 2 in Richtung der Fahrzeuglängsachse oder X-Achse gegenüber der mit der Sitzwanne 1 verbundenen Führungsplatte 10 verschiebbar ist.

Die Führungsplatte 10 dient zusätzlich zur Anlenkung des einen Endes einer Zugfeder 11 (Fig. 9 bis 12), die mit ihrem anderen Ende am Gehäuse 40 befestigt ist.

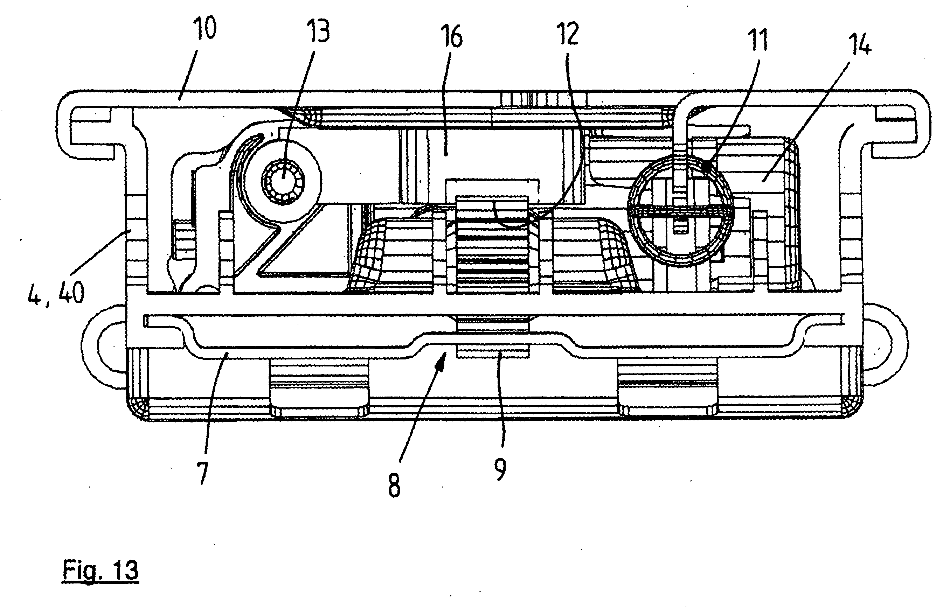

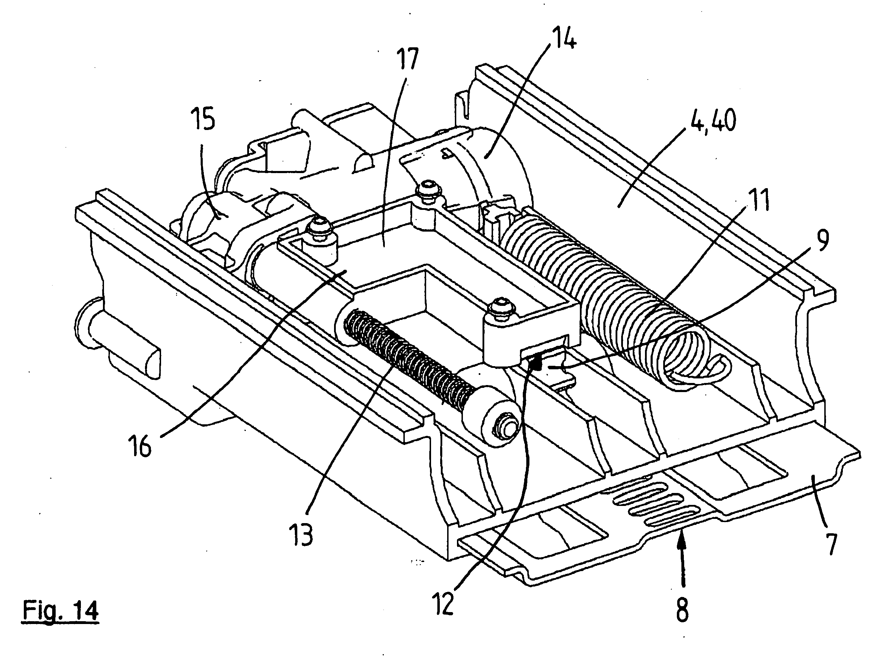

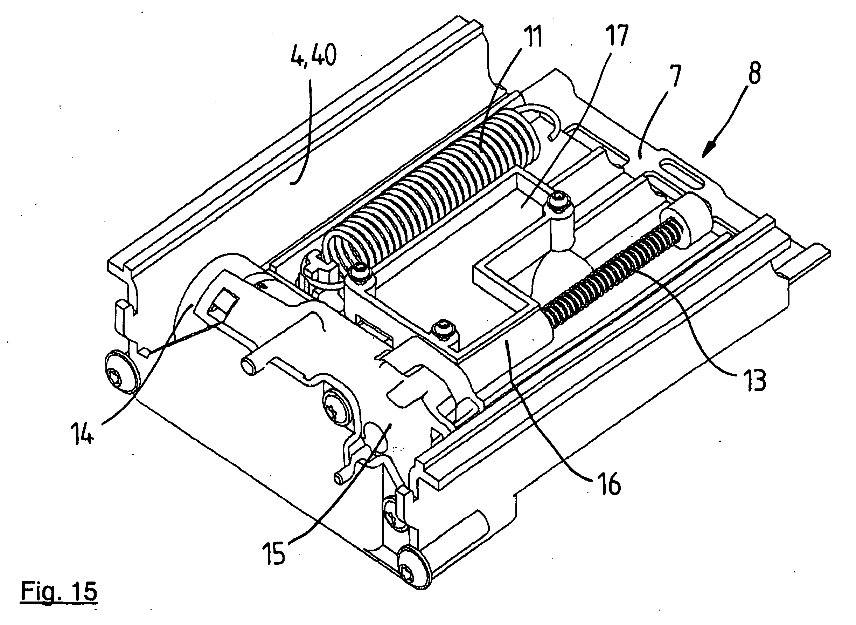

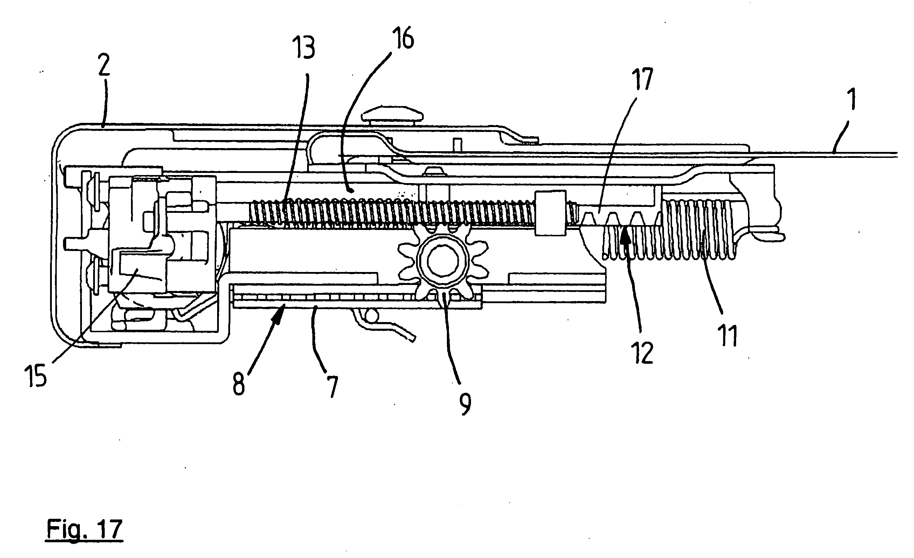

Die Antriebseinrichtung der Verstelleinheit 4 enthält entsprechend den Fig. 13 bis 17 einen am Boden des Gehäuse 40 angebrachten Motor 14, der über ein Getriebe 15 eine Spindel 13 zur Bewegung des Gehäuses 40 und damit des mit dem Gehäuse 40 verbundenen Sitztiefenverstellteils 2 in Richtung der Fahrzeuglängsachse bzw. X-Achse antreibt. Die Spindel 13 durchgreift eine Spindelmutter 16, die in einer Spindelmutteraufnahme 17 angeordnet ist. Die Spindelmutteraufnahme 17 ist an der das Gehäuse 40 in Richtung der Fahrzeuglängsachse oder X-Achse längsbeweglich lagernden Führungsplatte 10 angelenkt und weist ferner an der dem Ritzel 9 zugewandten Seite eine mit dem Ritzel 9 kämmende feststehende Verzahnung 12 (Fig. 14 und 17) auf.

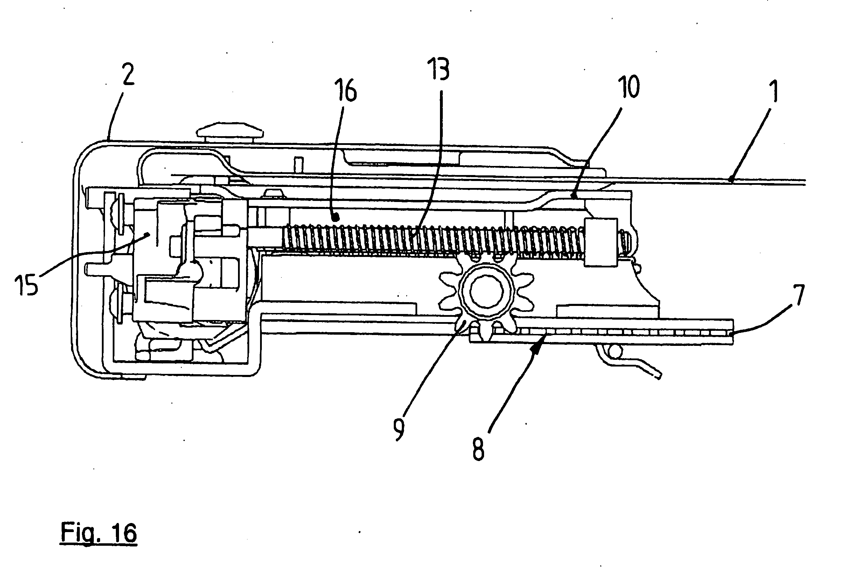

Beim Betätigen der Antriebseinrichtung der Verstelleinheit 4 durch Aktivieren des Motors 14 wird die von dem Motor 14 über das Getriebe 15 angetriebene Spindel 13 in der einen oder anderen Richtung in Drehung versetzt, so dass die Spindelmutteraufnahme 17, die die Spindelmutter 16 enthält, je nach Drehrichtung der Spindel 13 in der einen oder anderen Richtung in Richtung der Fahrzeuglängsachse oder X-Achse linear verstellt wird. Durch die Verstellbewegung des Gehäuses 40 der Verstelleinheit 4 in Richtung der Fahrzeuglängsachse oder X-Achse wird entsprechend den Fig. 16 und 17 infolge der mit der Führungsplatte 10 verbundenen Spindelmutteraufnahme 17 und der an der Spindelmutteraufnahme 17 ausgebildeten festen Verzahnung 12 das Ritzel 9 in eine Drehbewegung versetzt, so dass die an der Unterseite des Gehäuses 40 linear geführte Platte 7 der Nachführvorrichtung 5 für den Polsterstoff infolge des Eingriffs des Ritzels 9 in die in der Platte 7 vorgesehene Lochverzahnung 8 den gegenüber der Verstellbewegung der Verstelleinheit 4 doppelten Weg zurücklegt.

Beim Ausfahren des Sitztiefenverstellteils 2, d. h. bei der Relativbewegung zwischen der mit dem Sitztiefenverstellteil 2 verbundenen Verstelleinheit 4 gegenüber der an der Unterseite der Sitzwanne 1 angebrachten Führungsplatte 10 wird die Zugfeder 11 gespannt, so dass sie bei der Rückstellung des Sitztiefenverstellteils 2 in die eingezogene Stellung oder Ausgangslage unterstützend wirkt und sichergestellt, dass auch bei Schwergängigkeiten das als Oberschenkelauflage dienende Sitztiefenverstellteil 2 eingezogen wird und damit die minimale Sitztiefe gewährleistet. Zudem wird mit der Zugfeder 11 ein eventuelles Verzahnungsspiel zwischen dem Ritzel 9, der feststehenden Verzahnung 12 und der Lochverzahnung 8 ausgeglichen.

### Bezugszeichenliste

- 1: Sitzunterteil (Sitzwanne)
- 2: Sitztiefenverstellteil
- 3: Geradführung
- 4: Verstelleinheit
- 5: Polsterstoffnachführung
- 6: Stange
- 7: Platte
- 8: Lochverzahnung
- 9: Ritzel
- 10: Führungsplatte
- 11: Zugfeder
- 12: Feststehende Verzahnung
- 13: Spindel
- 14: Motor
- 15: Getriebe
- 16: Spindelmutter
- 17: Spindelmutteraufnahme
- 18: Verbindungselemente
- 21: horizontale Verstellteilfläche
- 22: vertikale Verstellteilfläche
- 40: Gehäuse
- 71,72: Laschen
- 101, 102: Seitenführungen
- 401, 402: abgewinkelte Stege

## Patentansprüche

1. Vorrichtung zur Sitztiefenverstellung eines Kraftfahrzeugsitzes mit einem gegenüber einem Sitzunterteil (1) des Kraftfahrzeugsitzes im Wesentlichen in Fahrtrichtung bewegbaren Sitztiefenverstellteil (2), einer Verstelleinheit (4) für das Sitztiefenverstellteil (2) sowie einer Nachführvorrichtung (5) für einen das Sitztiefenverstellteil (2) umspannenden Polsterstoff, wobei die Verstelleinheit (4) für das Sitztiefenverstellteil (2) sowie die Nachführvorrichtung (5) für den Polsterstoff eine Einheit bilden,
**dadurch gekennzeichnet,**
**dass** die Verstelleinheit (4) für das Sitztiefenverstellteil (2) ein Gehäuse (40) aufweist, welches linear beweglich unterhalb des Sitzunterteiles (1) angebracht und mit dem Sitztiefenverstellteil (2) verbunden ist.

2. Vorrichtung nach Anspruch 1, **dadurch gekennzeichnet, dass** das Sitztiefenverstellteil (2) eine sich in der Ebene der Fahrzeuglängsachse (X-Achse) und der Fahrzeugquerachse (Y-Achse) erstreckende horizontale Verstellteilfläche (21) und eine von der ersten Verstellteilfläche (21) im Wesentlichen rechtwinklig abgewinkelte vertikale Verstellteilfläche (22) aufweist, die sich in der Ebene der Fahrzeugquerachse (Y-Achse) und Fahrzeughochachse (Z-Achse) erstreckt und über Verbindungselemente (18) mit dem Gehäuse (40) verbunden ist.

3. Vorrichtung nach Anspruch 1 oder 2, **dadurch gekennzeichnet, dass** die Nachführvorrichtung (5) für den Polsterstoff als eine an der Unterseite des Gehäuses (40) der Verstelleinheit (4) linear beweglich angebrachte Platte (7) ausgebildet ist.

4. Vorrichtung nach Anspruch 3, **dadurch gekennzeichnet, dass** die Platte (7) eine Lochverzahnung (8) aufweist, die mit einem im Gehäuse (40) drehbar gelagerten Ritzel (9) kämmt.

5. Vorrichtung nach Anspruch 4, **dadurch gekennzeichnet, dass** das Ritzel (9) mit einer gegenüber dem Sitzunterteil (1) feststehenden Verzahnung (12) kämmt, derart, dass bei einer Bewegung des Gehäuses (40) das Ritzel (9) gedreht wird und durch seinen Eingriff in die Lochverzahnung (8) die die Lochverzahnung (8) enthaltende Platte (7) der Nachführvorrichtung (5) für den Polsterstoff einen gegenüber dem Verstellweg der Verstelleinheit (4) doppelten Weg zurücklegt.

6. Vorrichtung nach mindestens einem der vorangehenden Ansprüche, **dadurch gekennzeichnet, dass** das Gehäuse (40) der Verstelleinheit (4) mit einem Motor (14) verbunden ist, der eine das Gehäuse (40) verstellende Spindel (13) antreibt.

7. Vorrichtung nach Anspruch 6, **dadurch gekennzeichnet, dass** die Spindel (13) mit einer Spindelmutter (16) zusammenwirkt, die in einer an dem an dem Sitzunterteil (1) angebrachten Spindelmutteraufnahme (17) angeordnet ist.

8. Vorrichtung nach den Ansprüchen 4 und 6, **dadurch gekennzeichnet, dass** die feststehende Verzahnung (12) an der Unterseite der die Spindelmutter (16) aufnehmenden Spindelmutteraufnahme (17) angebracht ist.

9. Vorrichtung nach Anspruch 1, **dadurch gekennzeichnet, dass** das Gehäuse (40) der Verstelleinheit (4) in eine unterhalb des Sitzunterteiles (1) angebrachte, das Gehäuse (40) in Richtung der Fahrzeuglängsachse (X-Achse) führende Führungsplatte (10) eingehängt ist.

10. Vorrichtung nach Anspruch 9, **dadurch gekennzeichnet, dass** das Gehäuse (40) an den oberen Enden seiner Seitenwände abgewinkelte Stege (401, 402) aufweist, die von in Richtung der Fahrzeuglängsachse (X-Achse) ausgerichteten Seitenführungen (101, 102) der Führungsplatte (10) umgriffen sind.

## Claims

1. A device for adjusting the seat depth of a motor vehicle seat comprising a seat depth adjustment part (2) which is movable relative to a seat lower part (1) of the motor vehicle seat substantially in the direction of travel, an adjusting unit (4) for the seat depth adjustment part (2) and a guide device (5) for cushion material covering the seat depth adjustment part (2),
**characterized in that**
the adjustment unit (4) for the seat depth adjustment part (2) comprises a housing (40) which is mounted beneath the seat lower part (1) in a linearly movable manner and is connected with the seat depth adjustment part (2).

2. The device as claimed in claim 1, **characterized in that** the seat depth adjustment part (2) comprises a horizontal adjustment part surface (21) extending in the plane of the vehicle longitudinal axis (X-axis) and the vehicle transverse axis (Y-axis) and a vertical adjustment part surface (22) which is bent back substantially perpendicularly from the first adjustment part surface (21), extends in the plane of the vehicle transverse axis (Y-axis) and the vehicle vertical axis (Z-axis) and is connected via connecting elements (18) to the housing (40).

3. The device as claimed in claim 1 or 2, **characterized in that** the guide device (5) for the cushion material is configured as a plate (7) attached in a linear movable manner to the underside of the housing (40) of the adjusting unit (4).

4. The device as claimed in claim 3, **characterized in that** the plate (7) comprises a hole toothing (8) which meshes with a pinion (9) rotatably mounted in the housing (40).

5. The device as claimed in claim 4, **characterized in that** the pinion (9) meshes with teeth (12) which are fixed relative to the seat lower part (1), such that with a movement of the housing (40) the pinion (9) is rotated and by its engagement in the hole toothing (8) the plate (7) of the guide device (5) for the cushion material containing the hole toothing (8) covers double the path of the adjustment path of the adjusting unit (4).

6. The device as claimed in at least one of the preceding claims, **characterized in that** the housing (40) of the adjusting unit (4) is connected to a motor (14) which drives a spindle (13) adjusting the housing (40).

7. The device as claimed in claim 6, **characterized in that** the spindle (13) cooperates with a spindle nut (16) which is arranged in a spindle nut receiver (17) attached to the seat lower part (1).

8. The device as claimed in claims 4 and 6, **characterized in that** the fixed teeth (12) are attached to the underside of the spindle nut receiver (17) receiving the spindle nut (16).

9. The device as claimed in claim 1, **characterized in that** the housing (40) of the adjusting unit (4) is suspended in a guide plate (10) attached below the seat lower part (1) and guiding the housing (40) in the direction of the vehicle longitudinal axis (X-axis).

10. The device as claimed in claim 9, **characterized in that** the housing (40) comprises at the upper ends of its side walls bent-back projections (401, 402) which are encompassed by lateral guides (101, 102) of the guide plate (10) aligned in the direction of the vehicle longitudinal axis (X-axis).

## Revendications

1. Dispositif pour le réglage en profondeur d'un siège de véhicule automobile, comprenant une partie de réglage en profondeur (2) déplaçable sensiblement en direction de circulation par rapport à une partie inférieure (1) du siège de véhicule, une unité de réglage (4) pour la partie de réglage en profondeur (2) ainsi qu'un dispositif de poursuite (5) pour un matériau de rembourrage qui entoure la partie de réglage en profondeur (2), dans lequel l'unité de réglage (4) pour la partie de réglage en profondeur (2) ainsi que le dispositif de poursuite (5) pour le matériau de rembourrage forment une unité,
**caractérisé en ce que**
l'unité de réglage (4) pour la partie de réglage en profondeur (2) comprend un boîtier (40) qui est monté en déplacement linéaire au-dessous de la partie inférieure (1) du siège en déplacement linéaire, et qui est relié à la partie de réglage en profondeur (2).

2. Dispositif selon la revendication 1, **caractérisé en ce que** la partie de réglage en profondeur (2) présente une surface partielle de réglage horizontale (21) qui s'étend dans le plan de l'axe longitudinal du véhicule (axe-X) et l'axe transversal du véhicule (axe-Y), et une surface partielle de réglage verticale (22) coudée sensiblement à angle droit depuis la première surface partielle de réglage (21), qui s'étend dans le plan de l'axe transversal du véhicule (axe-Y) et l'axe vertical du véhicule (axe-Z), et qui est relié au boîtier (40) via des éléments de liaison (18).

3. Dispositif selon la revendication 1 ou 2, **caractérisé en ce que** le dispositif de poursuite (5) pour le matériau de rembourrage est réalisé sous la forme d'une plaque (7) montée en déplacement linéaire au niveau de la face inférieure du boîtier (14) de l'unité de réglage (4).

4. Dispositif selon la revendication 3, **caractérisé en ce que** la plaque (7) présente une denture à trous (8) qui engrène avec un pignon (9) monté en rotation dans le boîtier (40).

5. Dispositif selon la revendication 4, **caractérisé en ce que** le pignon (9) engrène avec une denture (12) stationnaire par rapport à la partie inférieure de siège (1) de telle manière que lors d'un mouvement du boîtier (40), le pignon (9) est tourné et, suite à son engrènement dans la denture à trous (8), la plaque (7), qui contient la denture à trous (8), du dispositif de poursuite (5) pour le matériau de rembourrage, parcourt un trajet double par rapport au trajet de réglage de l'unité de réglage (4).

6. Dispositif selon l'une au moins des revendications précédentes, **caractérisé en ce que** le boîtier (40) de l'unité de réglage (4) est relié à un moteur (14), lequel entraîne une broche (13) qui déplace le boîtier (40).

7. Dispositif selon la revendication 6, **caractérisé en ce que** la broche (13) coopère avec un écrou à broche (16) qui est agencé dans un logement (17) pour écrou à broche, ménagé sur la partie inférieure de siège (1).

8. Dispositif selon les revendications 4 et 6, **caractérisé en ce que** la denture stationnaire (12) est ménagée à la face inférieure du logement (17) pour écrou à broche qui reçoit l'écrou à broche (16).

9. Dispositif selon la revendication 1, **caractérisé en ce que** le boîtier (40) de l'unité de réglage (4) est accroché dans une plaque de guidage (10) montée au-dessous de la partie inférieure (1) du siège et guidant le boîtier (40) en direction de l'axe longitudinal du véhicule (axe-X).

10. Dispositif selon la revendication 9, **caractérisé en ce que** le boîtier (40) comporte des barrettes coudées (401, 402) aux extrémités supérieures de ses parois latérales, qui sont coiffées par des guidages latéraux (101, 102), de la plaque de guidage (10), orientés en direction de l'axe longitudinal du véhicule (axe-X).
